# EUROPEAN PATENT APPLICATION

(11) **EP 1 113 648 A2**
(43) Date of publication of application: **04.07.2001**
(21) Application number: 00309559.3
(22) Date of filing: 30.10.2000
(51) Int. Cl.: H04L 29/12, H04L 29/06, G06F 9/445

(54) **Generic registration of plug-ins for a directory server**

(30) Priority: 30.12.1999 US 474763
(71) Applicant: Nortel Networks Corporation, Montreal, Quebec H2Y 3Y4 (CA)
(72) Inventor: Dunn, Bruce E., Ottawa, Ontario K1Y 0K4 (CA)
(74) Representative: Mackenzie, Andrew Bryan

(57) **Abstract**

A registration method facilitates registration of a plug-in for a Lightweight Directory Access Protocol (LDAP) directory server accessible by a client. A generic interface is provided to mediate interaction between the client and the directory server. Information is obtained concerning one or more directory entries of interest to the plug-in. This information is recorded by the generic interface in a registry such that the generic interface is enabled to call at least one method of the plug-in upon receipt of a message from the client concerning at least one respective directory entry of interest. Directory entries of interest may be identified by either their object class or distinguished name (DN). In the latter case, a wildcard syntax may be used to enable the plug-in record an interest in one or more related directory entries.

## Description

### TECHNICAL FIELD

The present invention relates to directory server (DS) applications, and in particular to a mechanism for generic registration of plug-ins for use with directory server applications.

### BACKGROUND OF THE INVENTION

The Lightweight Directory Access Protocol (LDAP) is an emerging Internet Engineering Task Force (IETF) standard which is gaining popularity in the industry as a mechanism by which to store and access configuration information for network devices and services. The LDAP specification itself provides a framework and protocol for storing and retrieving information from a persistent store based on a schema specification.

A schema specification defines rules for adding and managing objects and attributes. These rules are specified through a data dictionary that provides a standard set of object types or classes from which objects can be created. Each object belongs to an object class which defines the attributes of the object. Generally, the schema is extensible (e.g. by modifying existing classes and/or adding new classes) so that it may be tailored to specific customer requirements.

The IETF provides some standardized schema to assist interoperability for certain network device management and network service management functionality. However, implemetors using LDAP also have a framework within which to specify their vendor-specific schema, and an Application Program Interface (API) which may be used to access the elements of that vendor-specific schema. Once an LDAP schema is published, other implementors have a common mechanism by which that schema may be accessed by, for example, provisioning, billing, or network management applications. Various vendors are developing LDAP schema specifications to provide an API which their customers may use to integrate the vendor's equipment and services into their internal provisioning, management, customer care and billing solutions.

There are several areas in which IETF LDAP standards have either just begun to realize, or have not yet begun to realize the need for standardization. These include: an access control mechanism; a change log mechanism; and a schema validation mechanism.

An access control mechanism provides the ability to restrict the access which any particular directory user and/or group may have to instantiated elements of an LDAP schema. A standardized access control mechanism is currently under development by the IETF.

A change log mechanism provides a means by which LDAP clients may determine when schema elements of interest have been changed by other LDAP clients. A standardized change log mechanism is currently under development by the IETF.

A directory information tree (DIT) validation mechanism provides means by which schema providers may deliver code which: ensures that updates to the DIT are consistent with syntactic and semantic checks which are required for the proper operation of the intended network device or network service; and provides any necessary side effect changes which may be required as a result of any particular update. For example, the deletion of one object from the DIT may require a cascade of associated changes in other objects of the DIT. A standardized DIT validation mechanism is particularly important for situations where it is desired to provide the LDAP schema as an API mechanism for other network applications. If the schema supplier cannot provide the code to enforce DIT consistency checks and required side effect processing, then it becomes more likely that the LDAP DIT in the directory will become incorrect, with unpredictable results when that information is populated into a network.

Presently there are no standardization efforts underway in the IETF LDAP working groups in respect of standardized DIT validation. Many of the current LDAP directory server vendors have addressed the need for DIT validation through proprietary callouts and API's in their directory server products. In order to provide multi-vendor LDAP server support, this situation requires that vendors provide directory-specific plug-in modules coded against each vendors proprietary API set.

Generic middleware solutions have been proposed which monitor LDAP requests between clients and a directory server to provide directory vendor neutral schema validation, as well as access control and 'change log mediation functions. Examples of such middleware solutions include the LDAP validation proxy (LVP) described in applicant's co-pending and co-assigned United States patent application entitled "A Framework for Directory Independent Schema Access", and the LDAP Trigger Access Process Gateway (LTAP gateway) recently proposed by Lucent/Bell Labs. In both of these solutions, schema validation is handled by plug-in modules which are attached to the middleware. Applicable methods of each plug-in can then be called by the middleware upon detection of selected predetermined events. Plugin modules may be coded by third party vendors and/or the client in order to provide the range of validation functionality required by the client. Typically, the plug-ins required by a client will be available to the generic middleware during an initialization phase of the LDAP session. In this case, instantiation and registration of each plug-in with the middleware can be accomplished during initialization of the middleware for any particular LDAP session. In some cases, however, a new plug-in may be instantiated by the client during the course of an LDAP session, and it is desirable to register this new plug-in with the middleware without interrupting the LDAP session.

Various solutions have been proposed for attaching plug-in modules to a directory server application. Typically, these plug-in registration mechanisms are proprietary, and frequently unique to the directory server. This tends to restrict the flexibility of developers of plug-in modules, and also forces developers to code a separate plug-in module for each vendor-specific directory server implementation.

Accordingly, there remains a need for a flexible and vendor-neutral registration mechanism for attaching validation code to a directory server.

### SUMMARY OF THE INVENTION

In general, an object of the present invention is to provide a method of attaching a plug-in to a directory server, which overcomes at least some of the above-noted deficiencies of the prior art.

More specifically, an object of the present invention is to provide a method of attaching a plug-in to a directory server, in which the plug-in module is registered with a generic middleware interposed between a client and the directory server.

Accordingly, an aspect of the present invention provides a method of registering a plug-in for a directory server accessible by a client. The method comprises the steps of: providing a generic interface adapted to mediate interaction between the client and the directory server; obtaining information concerning one or more directory entries of interest to the plug-in; and recording the information such that the generic interface is enabled to call at least one method of the plug-in upon receipt by the generic interface of a message concerning at least one respective directory entry of interest.

A further aspect of the invention provides a method of enabling validation of one or more selected message types between a directory server and a respective client, interaction between the directory server and the client being mediated by a generic interface. The method comprises the steps of: instantiating a plug-in adapted to validate the one or more selected message types; and enabling the generic interface to call one or more methods of the plug-in, upon receipt of any one of the one or more selected message types.

A still further aspect of the present invention provides system for attaching a plug-in to a directory server, the system comprises: a generic interface for mediating interaction between the directory server and a client, the generic interface being adapted to at least partially decode messages sent by the client to thereby determine at least a message type and a directory entry affected by the message; and means for registering the plug-in with the generic interface to thereby enable the generic interface to call one or more methods of the plug-in upon receipt of a message affecting a directory entry of interest to the plug-in.

In embodiments of the invention, the plug-in comprises a validation object adapted to validate selected message types received by the generic interface from the client. The selected message types may comprise, in respect of the at least one respective directory entry, any one or more of: add, delete and modify.

In an embodiment of the invention, the information concerning one or more directory entries of interest comprises information respecting a distinguished name (DN) of each directory entry of interest. Preferably, the distinguished name (DN) of each directory entry of interest is identified by means of a sequence of one or more predetermined wildcard operators adapted to identify one or more related directory entries. The one or more related directory entries comprise any one or more of: directory entries having at least one attribute in common; and directory entries subtending a root directory entry on a directory information tree (DIT).

In other embodiments of the invention, the information concerning one or more directory entries of interest comprises information respecting an object class of each directory entry of interest.

The step of recording the information preferably comprises a step of writing the information to a registry that is searchable by the generic interface.

Preferably, the step of obtaining information concerning one or more directory entries of interest comprises the steps of: searching to locate a library containing the information; and if a library is located, reading the information from the library. The library may be a dynamic link library (DLL), and may, for example, be stored at a predetermined location in the directory or at a predetermined location in a network path. A library concerning the plug-in may be created prior to instantiation of the plug-in.

### BRIEF DESCRIPTION OF THE DRAWINGS

Further features and advantages of the present invention will become apparent from the following detailed description, taken in combination with the appended drawings, in which:
Fig. 1. is a block diagram schematically illustrating elements of a generic directory server interface as may be used in conjunction with the present invention;
Fig. 2 is a flow-chart illustrating an exemplary process of initialization of the generic directory server interface; and
Fig. 3 is a flow-chart illustrating an exemplary process for registration of software components in accordance with an embodiment of the present invention.

It will be noted that throughout the appended drawings, like features are identified by like reference numerals.

### DETAILED DESCRIPTION OF THE PREFERRED EMBODIMENT

The present invention will now be described by way of a detailed description of a preferred embodiment, which is presented by way of example only, and is not intended to be limitative of the present invention, the features of which are defined in the appended claims.

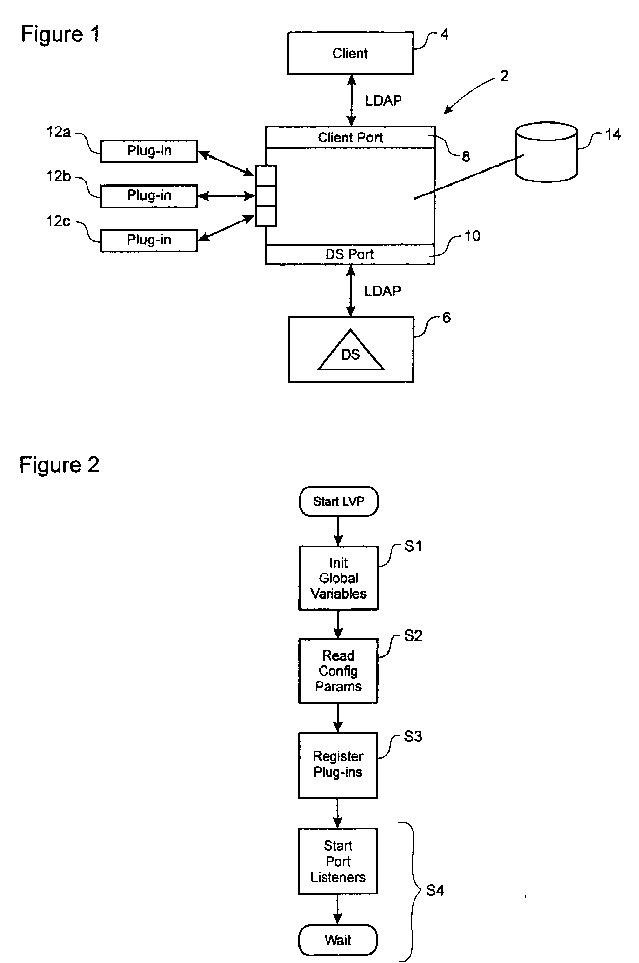

As shown in Figure 1, a generic middleware (e.g. an LDAP proxy) 2 is designed to operate as an intermediary between a client 4 and a directory server 6. Communication between the LDAP proxy 2, each client 4 and directory server 6 is preferably handled using conventional LDAP messaging. For this purpose, the LDAP proxy 2 preferably provides a client port 8 and a DS port 10 which provide appropriate socket connections and an application program interface (API) to facilitate messaging between the LDAP proxy 2 and each of the client 4 and DS server 6.

One or more plug-in modules 12 (e.g. validation objects) are registered with the LDAP proxy 2, by means of a registry 14 which may be co-resident with the LDAP proxy 2 or stored at a remote location. Collectively, the plug-in modules 12 provide the validation functionality of the LDAP proxy 2 and will normally be instantiated by the LDAP proxy 2 in accordance with the client's access privileges and validation requirements.

In use, the LDAP proxy 2 provides a front-end validation proxy for the directory server 6. The LDAP proxy 2 effectively intercepts and processes (i.e. at least partially decodes) requests (i.e. LDAP messages) sent by the client 4 to the directory server 6, and calls methods of any registered plug-in modules 12 which have indicated an interest in any directory entries effected by a client request. For validation purposes, the LDAP proxy 2 may examine each LDAP message, and call methods of a plug-in module 12, for only certain message types. For example, client requests which have the effect of adding, modifying, or deleting a selected attribute of a directory entry (that is, LDAP messages of type add, modify or delete) must be validated. Furthermore, it may be advantageous to restrict validation to situations where either one of the object class of the directory entry and/or the distinguished name (DN) of the directory entry are being modified. For example, a plug-in module 12 can be coded to validate client requests based on a particular object class of a directory entry without regard to where that directory entry is located within the Directory Information Tree (DIT).

On the other hand, a plug-in module 12 can be coded to validate client requests based on the distinguished name (DN) or relative distinguished name (RDN) of a specific directory entry. As will be described in greater detail below, validation of client requests based on the DN (or RDN) of a directory entry can conveniently be accomplished by registering the plug-in's interest in a specific DN or group of DNs based on a wildcarding syntax. This latter function permits such a plug-in module 12 to validate the structure of the DIT, which thereby frees another plug-in module 12 to validate client requests affecting the object class of a directory entry, and so validate the semantics of the entry itself.

As shown in Figure 2, registration of plug-in modules 12 can conveniently be integrated into an initialization sequence of the LDAP proxy 2. Exemplary steps in this initialization sequence are as follows. Following start-up of the LDAP proxy 2, global variables are initialized (at step S1) and configuration parameters of the LDAP proxy 2 and client 4 are read (at step S2). Plug-in modules 12 instantiated by the LDAP proxy 2 are then registered by the LDAP proxy 2 (step S3) as will be described in greater detail below. Following registration of the plug-in modules 12, the LDAP proxy 2 begins monitoring the client and DS ports 8 and 10 for LDAP messages (step S4).

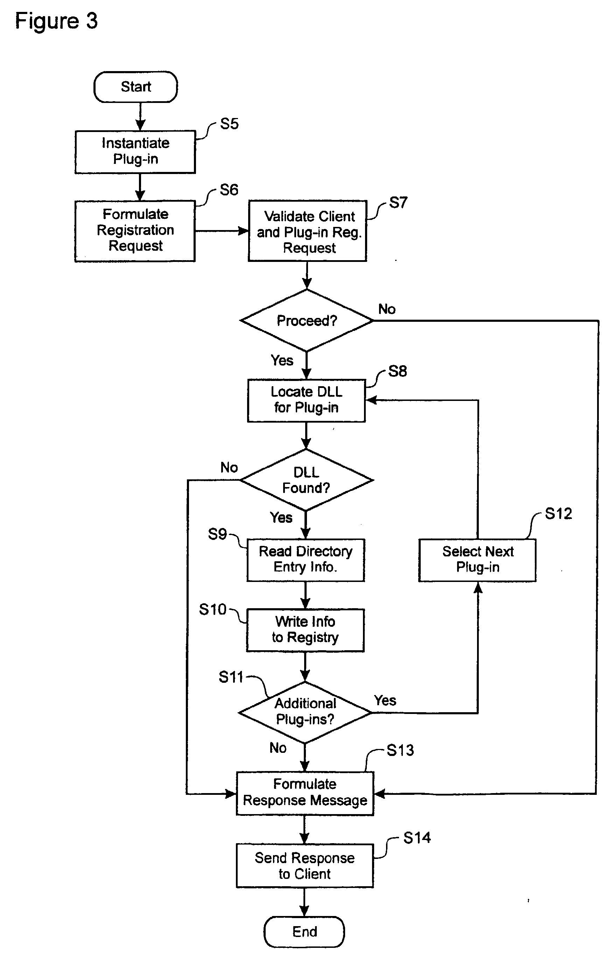

Figure 3 provides a flow chart showing an examplary process for registering one or more plug-in modules 12 with the LDAP proxy 2.

In accordance with the present invention, plug-in modules 12 can be registered during start-up of the LDAP proxy 2 as discussed above with respect to Figure 2, or dynamically during an LDAP session. In either case, registration of the plug-in module 12 begins with instantiation of the plug-in module 12 (step S5), and formulation of a registration request (step S6) which is sent to the LDAP proxy 2 via an LDAP message. Upon receipt of the registration request, the LDAP proxy 2 performs conventional validation of client credentials and the plug-in registration request (step S7). If the validation step S7 is completed successfully, the LDAP proxy 2 searches for a library (e.g. a Dynamic Link Library (DLL)) concerning the plug-in (step S8). If a DLL is found at step S8, information respecting directory entries of interest to the plug-in module 12 is read from the library (step S9), and subsequently written into the registry 14 (at step S10) so that the LDAP proxy 2 is enabled to call the plug-in module 12 upon receipt of a client request effecting the directory entry of interest to the plug-in module 12. An exemplary syntax for identifying directory entries by distinguished name (DN) is described below. Once information of directory entries of interest has been written into the registry 14, the LDAP proxy 2 may check to determine whether any additional plug-ins need to be registered (step S11). If additional plug-ins do need to be registered, the LDAP proxy 2 selects and register the next plug-in as described above with respect to steps S8-S11.

Upon completion of the above steps S7 through S12, the LDAP proxy 2 formulates a response message (step S13) indicative of the result of the registration process, and sends the response to the client 4 for handling (step S14). The content of the response message formulated at step S13 will depend on the results of the registration process. Thus, if the plug-in module 12 is successfully registered (following steps S8 through S11), the response message formulated at step S13 will indicate successful registration. Otherwise, the response message will indicate failure of the registration process, for example, by failure of the client validation at step S7, or by failure to locate a library at step S8.

As described above, a plug-in module 12 may indicate directory entries of interest by means of the distinguished name (DN) of the specific directory entry. A wildcard syntax can be used to indicate an interest in more than one related directory entry.

Exemplary 'wildcarding' syntaxes which may be used to indicate interest in more than just a single directory entry are shown below:

| **Syntax Example** | **Description** |
|---|---|
| ou=Nortel Networks | The RDN must match "Nortel Networks" exactly (case insensitive). |
| ou=^{*} | Any ou RDN. |
| cn=^{*} | Any cn RDN. |
| ^{*}=^{*} | Matches any single directory entry. |
| ^{*}=Nortel Networks | Matches any directory entry for which the RDN is "Nortel Networks". |
| [ou=^{*}] | Matches 1 or more sequential directory entries which are ou's. It will stop matching when the next RDN in the match DN matches the next RDN in the DN being matched. |
| [^{*}=^{*}] | Same as [ou=^{*}] except it matches any number of directory entries regardless of attribute name. It continues matching until the next RDN in the WC DN is matched. If the next RDN is never matched then the match attempt fails. |

The above exemplary wildcard syntaxes may be combined to provide sophisticated selection of directory entries of interest to a plug-in. Exemplary wildcarded DN registration sequences are as follows:

| **Example** | **Description** |
|---|---|
| ou=OPS Policy, ou=^{*}, ou=Customers | Validates the OPS Policy node itself under any customer node. |
| ^{*}=^{*}, ou=Policy Management, ou=^{*}, ou=Customers, o=^{*} | Validates entries which are children of Policy Management for any customer. The ^{*}=^{*} indicates that the type of qualifier used at this level of the tree and its value are not important. |
| cn=^{*}, [ou=^{*}], ou=Policies, ou=Policy Management, ou=^{*}, ou=Customers, ou=Nortel Networks, o=^{*} | The [ou=^{*}] indicates that there may be many levels of ou's which are not important before finding a cn. The first cn would match the final cn=^{*} RDN. |
| [^{*}=^{*}], ou=Policies, ou=Policy Management, ou=^{*}, ou=Customers, ou=Nortel Networks, o=^{*} | Anything and everything below Policies to as many levels as possible. This type of registration is legal but would generally be frowned upon since it would require the validation function to validate any and all DIT entries which fall below the Policies entry in the DIT. |

Thus it will be seen that the present invention provides a registration method facilitates registration of a plug-in for a Lightweight Directory Access Protocol (LDAP) directory server accessible by a client. A generic interface is provided to mediate interaction between the client and the directory server. Information is obtained concerning one or more directory entries of interest to the plug-in. This information is recorded by the generic interface in a registry such that the generic interface is enabled to call at least one method of the plug-in upon receipt of a message from the client concerning at least one respective directory entry of interest. Directory entries of interest may be identified by either their object class or distinguished name (DN). In the latter case, a wildcard syntax may be used to enable the plug-in record an interest in one or more related directory entries.

The embodiment(s) of the invention described above is(are) intended to be exemplary only. The scope of the invention is therefore intended to be limited solely by the scope of the appended claims.

## Claims

1. A method of registering a plug-in for a directory server accessible by a client, CHARACTERISED IN THAT the method comprises the steps of:
a) providing a generic interface adapted to mediate interaction between the client and the directory server
b) obtaining information concerning one or more directory entries of interest to the plug-in; and
c) recording the information such that the generic interface is enabled to call at least one method of the plug-in upon receipt by the generic interface of a message concerning at least one respective directory entry of interest.

2. A method as claimed in claim 1, CHARACTERISED IN THAT the plug-in comprises a validation object adapted to validate selected message types received by the generic interface from the client.

3. A method as claimed in claim 2, CHARACTERISED IN THAT the selected message types comprise, in respect of the at least one respective directory entry, any one or more of: add, delete and modify.

4. A method as claimed in claim 1 or 2, CHARACTERISED IN THAT the information concerning one or more directory entries of interest comprises information respecting a distinguished name (DN) of each directory entry of interest.

5. A method as claimed in claim 4, CHARACTERISED IN THAT the distinguished name (DN) of each directory entry of interest is identified by means of a sequence of one or more predetermined wildcard operators.

6. A method as claimed in claim 5, CHARACTERISED IN THAT the predetermined wildcard operators are adapted to identify one or more related directory entries.

7. A method as claimed in claim 1 or 2, CHARACTERISED IN THAT the information concerning one or more directory entries of interest comprises information respecting an object class of each directory entry of interest.

8. A method as claimed in any one of claims 1, 2, 4, or 7, CHARACTERISED IN THAT the step of recording the information comprises a step of writing the information to a registry that is searchable by the generic interface.

9. A method as claimed in any one of claims 1, 2, 4, or 7, CHARACTERISED IN THAT the step of obtaining information concerning one or more directory entries of interest comprises the steps of:
a) searching to locate a library containing the information; and
b) if a library is located, reading the information from the library.

10. A method as claimed in claim 9, CHARACTERISED IN THAT the library is a dynamic link library (DLL)

11. A method of enabling validation of one or more selected message types between a directory server and a respective client, interaction between the directory server and the client being mediated by a generic interface, CHARACTERISED IN THAT the method comprises the steps of:
a) instantiating a plug-in adapted to validate the one or more selected message types; and
b) enabling the generic interface to call one or more methods of the plug-in, upon receipt of any one of the one or more selected message types.

12. A method as claimed in claim 11, CHARACTERISED IN THAT the selected message types comprise, in respect of the at least one respective directory entry, any one or more of: add, delete and modify.

13. A method as claimed in claim 11 or 12, CHARACTERISED IN THAT the information concerning one or more directory entries of interest comprises information respecting a distinguished name (DN) of each directory entry of interest.

14. A method as claimed in claim 13, CHARACTERISED IN THAT the distinguished name (DN) of each directory entry of interest is identified by means of a sequence of one or more predetermined wildcard operators.

15. A method as claimed in claim 14, CHARACTERISED IN THAT the predetermined wildcard operators are adapted to identify one or more related directory entries.

16. A method as claimed in claim 11 or 12, CHARACTERISED IN THAT the information concerning one or more directory entries of interest comprises information respecting an object class of each directory entry of interest.

17. A method as claimed in any one of claims 11, 12, 13 or 16, CHARACTERISED IN THAT the step of recording the information comprises a step of writing the information to a registry that is searchable by the generic interface.

18. A method as claimed in any one of claims 11, 12, 13 or 16, CHARACTERISED IN THAT the step of obtaining information concerning one or more directory entries of interest comprises the steps of:
a) searching to locate a library containing the information; and
b) if a library is located, reading the information from the library.

19. A method as claimed in claim 18, CHARACTERISED IN THAT the library is a dynamic link library (DLL)

20. A system for attaching a plug-in to a directory server, the system comprising:
a) a generic interface for mediating interaction between the directory server and a client, the generic interface being adapted to at least partially decode messages sent by the client to thereby determine at least a message type and a directory entry affected by the message; and
b) means for registering the plug-in with the generic interface to thereby enable the generic interface to call one or more methods of the plug-in upon receipt of a message affecting a directory entry of interest to the plug-in.

21. A system as claimed in claim 20, CHARACTERISED IN THAT the means for registering the plug-in comprises a registry adapted for recording information concerning the directory entry of interest to the plug-in.

22. A system as claimed in claim 21, further comprising means for searching the registry upon receipt, by the generic interface, of a message having one of a predetermined set of selected message types.

23. A system as claimed in claim 22, CHARACTERISED IN THAT the predetermined set of selected message types include any one or more of add, delete and modify.
